Europäisches Patentamt

**European Patent Office**

Office européen des brevets

(19)

(11) Numéro de publication: **0 225 228**
**B1**

(12) **FASCICULE DE BREVET EUROPEEN**

(45) Date de publication du fascicule du brevet:
**15.03.89**

(51) Int. Cl.⁴: **B60R 22/20**

(21) Numéro de dépôt: **86402396.5**

(22) Date de dépôt: **27.10.86**

(54) **Dispositif de réglage de la position d'un renvoi de sangle de ceinture de sécurité.**

(30) Priorité: **30.10.85 FR 8516139**

(43) Date de publication de la demande:
**10.06.87 Bulletin 87/24**

(45) Mention de la délivrance du brevet:
**15.03.89 Bulletin 89/11**

(84) Etats contractants désignés:
**DE ES GB IT SE**

(56) Documents cités:
**EP-A- 0 093 024**
**DE-A- 2 720 789**
**DE-A- 3 209 351**
**US-A- 4 529 159**

**PATENTS ABSTRACTS OF JAPAN,**
**vol. 6, no. 213 (M-167)[1091], 26 octobre 1982; &**
**JP-A-57 118 950 (NISSAN JIDOSHA K.K.) 24-07-1982**

(73) Titulaire: **ECIA - EQUIPEMENTS ET COMPOSANTS POUR L'INDUSTRIE AUTOMOBILE, F-25400 Audincourt (Doubs)(FR)**

(72) Inventeur: **Escaravage, Gérard, 5, Impasse des Graverots, F-25700 Valentigney(FR)**

(74) Mandataire: **Bressand, Georges et al, c/o CABINET LAVOIX 2 Place d'Estienne d'Orves, F-75441 Paris Cedex 09(FR)**

ACTORUM AG

## Description

La présente invention concerne un dispositif de réglage de la position d'un renvoi de sangle notamment de ceinture de sécurité pour véhicule automobile.

Sur la plupart des véhicules, ce renvoi de sangle est disposé sur un doigt d'ancrage fixé sur la carrosserie du véhicule, à une hauteur convenant à une majorité d'utilisateurs dits de taille normale.

Toutefois, cette hauteur ne convient pas à certains utilisateurs, en particulier aux personnes de petite taille.

Pour résoudre ce problème, on connaît dans l'état de la technique un certain nombre de dispositifs de réglage de la hauteur de ce renvoi de sangle.

Ainsi, par exemple, on connait d'après le document FR-A 2 484 343, un dispositif de réglage en hauteur d'un point d'ancrage d'une ceinture de sécurité selon le préambule de la revendication 1, dans lequel un coulisseau se déplace le long d'une tige support filetée dans la plage de réglage de l'ancrage, ladite tige étant montée à rotation entre les parois d'un boîtier fixé à un élément de la carrosserie du véhicule. La face frontale de ce coulisseau porte une ferrure d'ancrage de la ceinture et sa face dorsale porte un organe d'immobilisation en rotation du coulisseau qui le guide le long de la paroi de fond du boîtier.

On connaît également d'après le document FR-A 2 488 201, un dispositif pour régler la hauteur d'une ferrure de renvoi d'une ceinture de sécurité de véhicule, comportant un organe de réglage portant la ferrure avec un verrou s'enclenchant dans des crans d'arrêt d'un guidage rectiligne, le verrou pouvant être dégagé par un mécanisme de manoeuvre.

On connaît également d'après le document FR-A 2 482 539, un dispositif pour le réglage du point d'ancrage d'une ceinture de sécurité, disposé au-dessus de l'épaule d'un occupant d'un véhicule, dans lequel le point d'ancrage est porté par un curseur de glissière monté déplaçable dans une glissière et immobilisable en position par un cliquet coopérant avec une série d'orifices réalisés dans la glissière.

Le document FR-A 2 513 887 décrit quant à lui un dispositif pour le réglage de la position en hauteur de la ferrure supérieure du baudrier d'une ceinture de sécurité. Ce dispositif comprend une glissière solidaire de la carrosserie du véhicule, munie d'une fente de guidage et d'évidements, dans lesquels pénètre au moins un organe de blocage monté sur un coulisseau qui porte la ferrure et peut être verrouillé et déverrouillé au moyen d'un organe d'actionnement manuel.

Le document FR-A 2 543 838 décrit un dispositif d'ancrage pour point haut de ceinture de sécurité, comprenant un rail ayant plusieurs trous qui sont en deux parties, et un ergot de blocage qui peut être commandé par un bouton de manoeuvre. Le réglage de la position du point d'ancrage est obtenu par extraction de l'ergot du trou, déplacement du coulisseau et réintroduction de l'ergot dans un autre trou.

Enfin, le document FR-A 2 536 288 décrit un dispositif pour le réglage en hauteur d'une ceinture de sécurité pour véhicule automobile, constitué par une glissière de guidage comportant des deux côtés, des ouvertures de verrouillage disposées les unes au-dessus des autres, et un chariot qui peut être déplacé dans la glissière, ce chariot portant une pièce de fixation ou de renvoi de la ceinture et comportant des éléments d'arrêt qui peuvent être déplacés transversalement par rapport à la direction du mouvement du chariot, au moyen d'une touche en s'opposant a l'action d'un ressort, pour passer d'une position de verrouillage à une position de déverrouillage.

Cependant, tous ces dispositifs présentent un certain nombre d'inconvénients, notamment au niveau des possibilités de réglage, de leur structure relativement complexe et donc de leurs coûts de fabrication et de montage relativement élevés.

Le but de l'invention est donc de résoudre les problèmes évoqués ci-dessus en proposant un dispositif de réglage rapide et précis, de la position du renvoi de sangle, pour adapter celle-ci à la morphologie de l'utilisateur.

A cet effet, l'invention a pour objet un dispositif de réglage de la position d'un renvoi de sangle de ceinture de sécurité, notamment pour véhicule automobile, dans lequel le renvoi de sangle est monté déplaçable en tout point d'une course de réglage définie entre deux positions extrêmes dans un rail de guidage, caractérisé en ce qu'il comporte des moyens d'actionnement destinés à entraîner dans les deux sens de rotation, un tambour autour duquel est enroulé un organe de liaison, dont les deux extrémités sont solidaires du véhicule, par l'intermédiaire de moyens d'accouplement autour desquels est disposé ledit renvoi de sangle, pour déplacer celui-ci entre les deux positions extrêmes, et en ce que lesdits moyens d'accouplement comportent des moyens de blocage de la rotation du tambour lorsqu'une action est exercée sur le renvoi de sangle.

L'invention sera mieux comprise à l'aide de la description qui va suivre, donnée uniquement à titre d'exemple et faite en se référant aux dessins annexés, sur lesquels:

– la Fig. 1 représente une vue de face d'un dispositif de réglage selon l'invention;
– la Fig. 2 représente une vue en coupe latérale d'un dispositif de réglage selon l'invention; et
– la Fig. 3 représente une section des moyens d'accouplement entrant dans la constitution d'un dispositif selon l'invention.

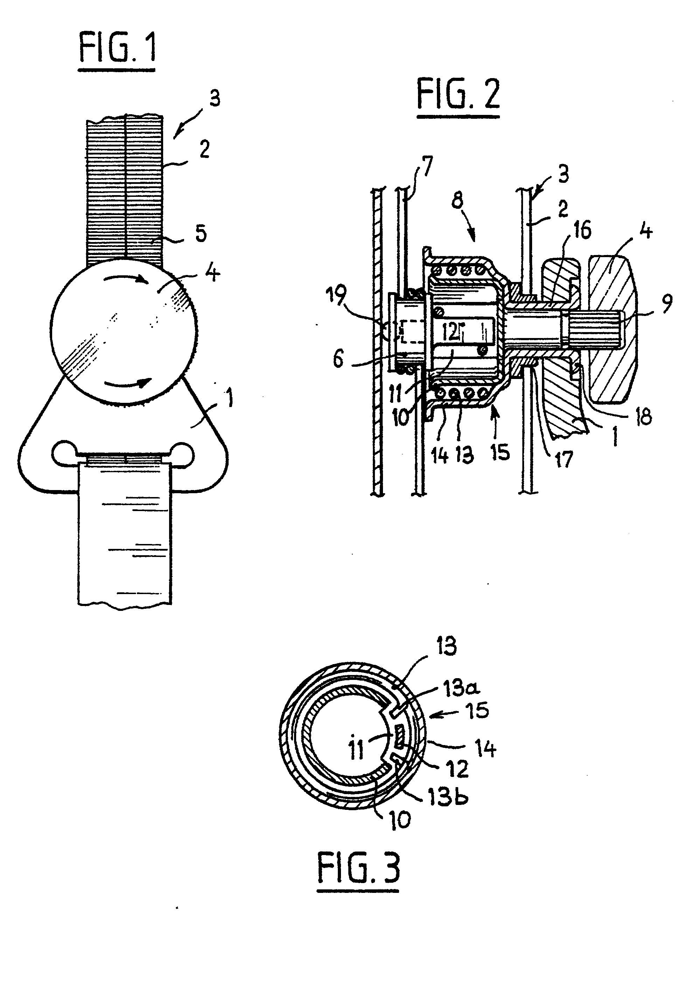

Ainsi qu'on peut le voir sur la Fig. 1, un renvoi de sangle 1 est monté déplaçable le long d'une fente 2 d'un rail de guidage 3 entre deux positions extrêmes. Ce déplacement est assuré par un organe d'actionnement 4 qui peut être manœuvré par exemple manuellement pour permettre la montée ou la descente du renvoi de sangle 1 dans ladite fente du rail.

Il est à noter que la fente 2 du rail peut comporter des moyens déformables 5 de fermeture de celle-ci, pour empêcher toute introduction de poussière ou de corps étrangers dans le mécanisme du dispositif.

Comme il est représenté sur la Fig. 2, l'organe d'actionnement 4 constitué par exemple par un bouton moleté est destiné à entraîner dans les deux sens de rotation, un tambour 6 autour duquel est enroulé un organe de liaison 7 dont les deux extrémités sont solidaires du véhicule. Cet entraînement est réalisé par l'intermédiaire de moyens d'accouplement 8 autour desquels est disposé le renvoi de sangle 1, pour déplacer ce renvoi de sangle en tout point d'une course de réglage définie par les deux positions extrêmes.

Les moyens d'accouplement sont constitués par une tige de transmission 9 dont l'une des extrémités fait saillie hors du rail de guidage 3 à travers la fente 2 ménagée dans celui-ci, et est solidaire de l'organe d'actionnement 4. L'autre extrémité de cette tige de transmission 9 est solidaire d'une pièce de transmission 10, de section à peu près circulaire et comportant une échancrure 11 dont les rebords sont destinés à coopérer avec une partie en saillie excentrée 12 du tambour 6, disposée entre les rebords de ladite échancrure, pour assurer la transmission, au tambour, de la rotation imprimée aux moyens d'actionnement 4.

Ainsi, une rotation transmise au tambour permet d'enrouler par exemple le brin supérieur de l'organe de liaison et de dérouler le brin inférieur de sorte que l'ensemble du dispositif et donc le renvoi de sangle, se déplacent vers le haut.

Ces moyens d'accouplement comportent également des moyens de blocage de la rotation du tambour 6 lorsqu'une action est exercée sur le renvoi de sangle, par exemple en cas de collision, etc..

Ces moyens de blocage sont constitués par un ressort hélicoïdal 13 monté sous contrainte dans une première partie cylindrique 14 d'un boîtier 15, disposée autour de la pièce de transmission 10, ce boîtier étant immobilisé en rotation, mais pas en translation, dans le rail de guidage par tous moyens connus, par exemple par des parties de celui-ci coopérant avec les parois latérales du rail de guidage ou avec la fente de celui-ci.

Ce boîtier présente également une seconde partie cylindrique 16 disposée autour de la tige de transmission 9 et sur laquelle est monté à rotation le renvoi de sangle 1.

Comme il est représenté sur la Fig.3, le ressort hélicoïdal 13 présente à chacune de ses extrémités une partie repliée, 13a et 13b, disposée entre un rebord de l'échancrure 11 de la pièce de liaison 10 et la partie en saillie 12 du tambour 6.

Comme on peut le verra par la suite, les rebords de l'échancrure constituent des organes de rétrécissement du ressort autour de son axe et la partie en saillie du tambour, un organe de serrage du ressort contre la surface interne de la première partie cylindrique du boîtier.

Si l'on revient à la Fig.2, on constate que le renvoi de sangle 1 est maintenu en position sur la seconde partie 16 du boîtier par une entretoise 17 disposée sur cette première partie au niveau de la fente 2 du rail de guidage 3 et prenant appui sur la seconde partie du boîtier, et par un rebord 18 ménagé à l'extrémité correspondante de la première partie du boîtier.

Il est à noter que ladite entretoise 17 constitue également des premiers moyens anti-friction permettant de limiter les frottements entre le boîtier et le rail de guidage.

Des seconds moyens anti-friction, avantageusement constitués par une bille 19, sont prévus entre le tambour 6 et la paroi correspondante du rail de guidage 3.

Le fonctionnement d'un tel dispositif est le suivant.

Lorsqu'un utilisateur désire déplacer le renvoi de sangle, il agit sur l'organe d'actionnement 4 en lui imprimant un mouvement de rotation soit dans un sens, soit dans l'autre. Ce mouvement de rotation est transmis par l'intermédiaire de la tige de transmission 9 à la pièce de transmission 10 qui, par l'intermédiaire des rebords de son échancrure 11, vient exercer une action sur l'une des parties repliées 13a ou 13b du ressort, qui amène celui-ci à se rétrécir autour de son axe. Ce ressort 13 se rétrécissant autour de son axe, les forces de frottement, entre celui-ci et la première partie cylindrique du boîtier 15 immobilisé en rotation par rapport au rail de guidage, deviennent suffisamment faibles pour que la rotation de la pièce de transmission entraîne la rotation du ressort, mais également la rotation de la partie en saillie 12 du tambour 6 et donc du tambour 6 lui-même. Dans ce cas, l'organe de liaison 7, constitué par exemple par un câble souple, s'enroule autour du tambour permettant ainsi le déplacement du dispositif et donc du renvoi de sangle le long du rail de guidage, vers la position désirée.

Par contre, lorsqu'une action est exercée sur le renvoi de sangle, par exemple lors d'une traction exercée sur la sangle de ceinture de sécurité, c'est le tambour 6 qui, par l'intermédiaire de sa partie en saillie 12, tente de faire tourner la pièce de transmission 10 et donc le bouton moleté pour déplacer le renvoi de sangle dans le sens de la force exercée sur la sangle de ceinture de sécurité.

Cependant, cette partie en saillie 12 du tambour 6 vient en appui contre l'une ou l'autre des parties repliées 13a, 13b du ressort 13, et exerce sur l'une ou l'autre de celles-ci, une action proportionnelle à l'action exercée sur le renvoi de sangle, qui tend à écarter les spires du ressort et donc à serrer celui-ci contre la surface interne de la première partie cylindrique du boîtier qui est immobilisé en rotation dans le rail de guidage. Ce serrage a pour effet de bloquer le ressort contre toute rotation à l'intérieur de la première partie cylindrique du boîtier et donc d'immobiliser la partie en saillie 12 du tambour 6 et donc le tambour 6 lui-même, empêchant ainsi tout déplacement du dispositif et donc du renvoi de sangle.

Il va de soi que les moyens d'actionnement 4 peuvent être constitués par tout dispositif approprié permettant d'imprimer un mouvement de rotation à la tige de transmission 9 et donc au tambour 6.

## Revendications

1. Dispositif de réglage de la position d'un renvoi de sangle (1) de ceinture de sécurité, notamment pour véhicule automobile, dans lequel le renvoi de sangle est monté déplaçable en tout point d'une course de réglage définie entre deux positions extrêmes dans un rail de guidage (3), caractérisé en ce qu'il comporte des moyens d'actionnement (4) destinés à entraîner dans les deux sens de rotation un tambour (6) autour duquel est enroulé un organe de liaison (7) dont les deux extrémités sont solidaires du véhicule, par l'intermédiaire de moyens d'accouplement (8) autour desquels est disposé le renvoi de sangle (1), pour déplacer celui-ci entre les deux positions extrêmes et en ce que lesdits moyens d'accouplement comportent des moyens de blocage de la rotation du tambour lorsqu'une action est exercée sur le renvoi de sangle.

2. Dispositif selon la revendication 1, caractérisé en ce que les moyens d'accouplement sont constitués par une tige de transmission (9) dont l'une des extrémités fait saillie hors du rail de guidage (3) à travers une fente (2) ménagée dans celui-ci, et est solidaire des moyens d'actionnement (4), et dont l'autre extrémité est solidaire d'une pièce de transmission (10) comportant une échancrure (11) dont les rebords sont destinés à coopérer avec une partie en saillie (12) du tambour (6) disposée entre les rebords de ladite échancrure pour assurer la transmission, au tambour, de la rotation imprimée à la tige de transmission par les moyens d'actionnement (4).

3. Dispositif selon la revendication 2, caractérisé en ce que les moyens de blocage sont constitués par un ressort hélicoïdal (13) monté sous contrainte dans une première partie cylindrique (14) d'un boîtier (15), disposée autour de la pièce de transmission (10), ce boîtier étant immobilisé en rotation dans le rail de guidage (3) et présentant une seconde partie cylindrique (16) disposée autour de la tige de transmission (9), et sur laquelle est monté à rotation le renvoi de sangle (1), le ressort hélicoïdal (13) présentant à chacune de ses extrémités une partie repliée (13a,13b) disposée entre un rebord de l'échancrure (11) de la pièce de liaison (10), et la partie en saillie (12) du tambour, les rebords de l'échancrure (11) constituant des organes de rétrécissement du ressort autour de son axe, et la partie en saillie (12), un organe de serrage du ressort (13) contre la surface interne de la première partie cylindrique (14) du boîtier (15).

4. Dispositif selon la revendication 3, caractérisé en ce que le renvoi de sangle (1) est maintenu en position sur la seconde partie (16) du boîtier (15) par une entretoise (17) disposée sur cette première partie et prenant appui sur la seconde partie du boîtier, et par un rebord (18) ménagé à l'extrémité correspondante de la première partie, ladite entretoise constituant des premiers moyens anti-friction pour limiter le frottement entre le boîtier (15) et le rail de guidage (3).

5. Dispositif selon l'une quelconque des revendications précédentes, caractérisé en ce que des seconds moyens anti-friction sont prévus entre le tambour (6) et la paroi correspondante du rail de guidage (3).

6. Dispositif selon la revendication 5, caractérisé en ce que les seconds moyens anti-friction sont constitués par une bille (19).

7. Dispositif selon l'une quelconque des revendications précédentes, caractérisé en ce que l'organe de liaison (7) est constitué par un câble souple.

8. Dispositif selon l'une quelconque des revendications précédentes, caractérisé en ce que les moyens d'actionnement sont constitués par un bouton moleté (4).

## Patentansprüche

1. Vorrichtung zur Einstellung der Position eines Sicherheitsgurtumlenkbeschlags (1), insbesondere für Kraftfahrzeuge, in der der Gurtumlenkbeschlag verschiebbar in allen Punkten eines Einstellweges angeordnet ist, der zwischen zwei Endpositionen in einer Führungsschiene (3) definiert ist, dadurch gekennzeichnet, daß sie Betätigungsmittel (4) aufweist, die dazu bestimmt sind, in den beiden Umdrehungsrichtungen eine Trommel (6) mitzunehmen, um die ein Verbindungsorgan (7) gewickelt ist, dessen beide Enden mit dem Fahrzeug verbunden sind, mittels Kopplungsmitteln (8), um die der Gurtumlenkbeschlag (1) angeordnet ist, um diesen zwischen den beiden Endstellungen zu verschieben, und daß die Kopplungsmittel Blockierungsmittel der Drehung der Trommel aufweisen, wenn eine Betätigung auf den Gurtumlenkbeschlag ausgeübt wird.

2. Vorrichtung nach Anspruch 1, dadurch gekennzeichnet, daß die Kopplungsmittel aus einer Übertragungsspindel (9) gebildet sind, deren eines Ende aus der Führungsschiene (3) durch einen Spalt (2) hindurch vorspringt, der in ihr ausgebildet ist, und mit den Betätigungsmitteln (4) verbunden ist, und deren anderes Ende mit einem Übertragungsstück (10) verbunden ist, das einen bogenförmigen Ausschnitt (11) aufweist, dessen Ränder dazu bestimmt sind, mit einem vorspringenden Abschnitt (12) der Trommel (6) zusammenzuwirken, der zwischen den Rändern des bogenförmigen Abschnitts angeordnet ist, um die Übertragung der Drehung auf die Rolle, aufgebracht auf die Übertragungsspindel durch die Betätigungsmittel (4) sicherzustellen.

3. Vorrichtung nach Anspruch 2, dadurch gekennzeichnet, daß die Blockierungsmittel durch eine Schraubenfeder (13) gebildet sind, die unter Spannung in einem ersten zylindrischen Abschnitt (14) eines Gehäuses (15) angeordnet ist, der um das Übertragungsstück (10) angeordnet ist, wobei das Gehäuse drehunbeweglich in der Führungsschiene (3) ist und einen zweiten zylindrischen Abschnitt (16) aufweist, der um die Übertragungsspindel (9) angeordnet ist, und auf dem zur Drehung der Gurtumlenkbeschlag (1) angeordnet ist, wobei die Schraubenfeder (13) an jedem ihrer Enden einen umgeklappten oder umgebogenen Bereich (13a, 13b) aufweist, der zwischen einem Rand bzw. einer Randleiste des bogenförmigen Ausschnitts (11) des Verbindungsstücks (10) und dem Vorsprungabschnitt (12) der Trommel angeordnet ist, wobei die Ränder des bogenförmigen Ausschnitts (11) Rückzugsorgane der Feder um ihre Achse, und der Vorsprungabschnitt (12) ein Zusammendrückorgan der Feder (13) gegen die innere Seite des ersten zylindrischen Abschnitts (14) des Gehäuses (15) bilden.

4. Vorrichtung nach Anspruch 3, dadurch gekennzeichnet, daß der Gurtumlenkbeschlag (1) in seiner Stellung auf dem zweiten Abschnitt (16) des Gehäuses (15) durch einen bogenförmigen Ausschnitt (17) gehalten wird, der auf dem ersten Abschnitt angeordnet ist und in Anlage ist an den zweiten Abschnitt des Gehäuses, und durch einen Rand (18) in Position gehalten wird, der am entsprechenden Ende des ersten Abschnitts ausgebildet ist, wobei der bogenförmige Ausschnitt erste Antireibungsmittel bildet, um die Reibung zwischen dem Gehäuse (15) und der Führungsschiene (3) zu begrenzen.

5. Vorrichtung nach einem der vorhergehenden Ansprüche, dadurch gekennzeichnet, daß die zweiten Antireibungsmittel zwischen der Trommel (6) und der entsprechenden Seitenwand der Führungsschiene (3) vorgesehen sind.

6. Vorrichtung nach Anspruch 5, dadurch gekennzeichnet, daß die zweiten Antireibungsmittel durch eine Kugel (19) gebildet sind.

7. Vorrichtung nach einem der vorhergehenden Ansprüche, dadurch gekennzeichnet, daß das Verbindungsorgan (7) aus einem Anschlußkabel (câble souple) gebildet ist.

8. Vorrichtung nach einem der vorhergehenden Ansprüche, dadurch gekennzeichnet, daß die Betätigungsmittel aus einem Rändelrad (4) gebildet sind.

## Claims

1. A device for adjusting the position of a strap return element (1) of a safety belt, more particularly for a motor vehicle, wherein the strap return element is mounted to be displaceable at any point over an adjusting travel defined between two end positions in a guide rail (3), characterized in that the device comprises actuating means (4) adapted to drive in both directions of rotation a drum (6) around which a connecting element (7) is wound whose two ends are connected to the vehicle, via coupling means (8) around which the strap element (1) is disposed, to displace the latter between the two end positions, the coupling means comprising means for locking the rotation of the drum when a force is exerted on the strap return element.

2. A device according to claim 1, characterized in that the coupling means are formed by a transmission rod (9) one of whose ends projects out of the guide rail (3) through a slot (2) formed therein, and is connected to the actuating means (4), the other end being connected to a transmission member (10) comprising a notch (11) whose edges are adapted to cooperate with a projecting portion (12) of the drum (6) disposed between the edges of the notch to transmit to the drum the rotation imparted to the transmission rod by the actuating means (4).

3. A device according to claim 2, characterized in that the locking means comprise a helical spring (13) mounted stressed in a first cylindrical portion (14) of a casing (15) disposed around the transmission member (10), the casing being prevented from rotating in the guide rail (3) and having a second cylindrical portion (16) which is disposed around the transmission rod (9) and on which the strap return element (1) is mounted, the coil spring (13) having at each end a bent portion (13a, 13b) disposed between an edge of the notch (11) of the connecting member (10) and the projecting portion (12) of the drum, the edges of the notch (11) forming elements for narrowing the spring around its axis, and the projecting portion (12) forming an element for clamping the spring (13) against the inner surface of the first cylindrical portion (14) of the casing (15).

4. A device according to claim 3, characterized in that the strap return element (1) is retained in position on the second portion (16) of the casing (15) by a strut (17) disposed on such first portion and bearing against the second portion of the casing, and by a flange (18) provided at the corresponding end of the first portion of the casing, such strut forming first anti-friction means to limit the friction between the casing (15) and the guide rail (3).

5. A device according to any of the preceding claims, characterized in that second anti-friction means are provided between the drum (6) and the corresponding wall of the guide rail (3).

6. A device according to claim 5, characterized in that the second anti-friction means are formed by a ball (19).

7. A device according to any of the preceding claims, characterized in that the connecting member (7) is formed by a flexible cable.

8. A device according to any of the preceding claims, characterized in that the actuating means are formed by a knurled knob (4).

## FIG.1

## FIG.2

## FIG.3